# EUROPEAN PATENT APPLICATION

(11) **EP 4 006 234 A1**
(43) Date of publication of application: **01.06.2022**
(21) Application number: 20383041.9
(22) Date of filing: 30.11.2020
(51) Int. Cl.: E02D 27/42, F24S 25/617, E04H 12/08, H02S 20/10, E02D 27/50, E01F 9/685, E04H 12/22

(54) **FOUNDATION OF PHOTOVOLTAIC STRUCTURES**

(71) Applicant: Soluciones Técnicas Integrales Norland S. L., 31008 Pamplona (Navarra) (ES)
(72) Inventor: JIMÉNEZ ROMERO, Sergio, 31008 Pamplona (Navarra) (ES)
(74) Representative: Pons

(57) **Abstract**

The invention relates to a foundation (1) of photovoltaic structures comprising a metal profile (2) supporting at least part of a photovoltaic panel and comprising a distal portion (4) embedded in the ground (3), wherein said foundation (1) further comprises by way of reinforcement a plastic part (5) embedded in the ground (3), comprising an outer cross section (6) and an inner through hole (7) with a smaller cross section than the outer cross section (6), wherein said through hole (7) houses at least part of the distal portion (4) of the metal profile (2), said through hole (7) being in intimate contact with the transverse cross section (8) thereof, thus enabling the embedding length (L) to be reduced and consequently the length of the metal profiles (2), as well as also facilitating the transportation and on-site execution with respect to other solutions.

## Description

### OBJECT OF THE INVENTION

The present invention can be included in the technical field of foundations, preferably foundations of photovoltaic structures which are fixed or with solar tracking. More particularly, the present invention describes a foundation which, by means of a plastic part embedded in the ground, clasping and in intimate contact in a cross section of the embedded metal profile which supports part of the loads of the photovoltaic structure, enables the embedding length to be reduced and consequently the length of the metal profiles, as well as facilitating transport and on-site execution with respect to other solutions.

### BACKGROUND OF THE INVENTION

Some solutions for foundations of photovoltaic structures are known in the state of the art.

The foundations of photovoltaic solar structures, both for fixed structures and those with solar tracking, comprise driving metal profiles into the ground by directly striking them at a specific depth. This embedding depth depends on the actions on the structure, which in turn depend fundamentally on the weather conditions of the site (wind, snow and seismic), and on the bearing characteristics or resistance of the soil.

Under certain circumstances, either when the actions to be transmitted are high, or when the bearing capacity of the soil is low, or when both of these occur simultaneously, the use is known, for example, of a concrete or a cement mortar embedded in the ground and arranged around a portion of the metal profile embedded in the ground as reinforcement.

However, solar plants are used in locations far from any city, where supplying quality concrete or mortars in a timely manner is often complex if not impossible, or alternatively requires the installation of a small on-site plant to this end.

Moreover, the limitation of concrete with regard to long-distance transport without loss of mechanical performance is known.

### DESCRIPTION OF THE INVENTION

The present invention intends to solve some of the problems mentioned in the state of the art. More particularly, the present invention describes a foundation of photovoltaic structures comprising a metal profile which supports at least in part a photovoltaic panel and comprises a distal portion embedded in the ground, wherein said foundation further comprises, by way of reinforcement, a plastic part embedded in the ground, comprising an outer cross section and an inner through hole with a smaller cross section than the outer cross section, wherein said through hole houses part of the distal portion of the metal profile, said through hole being in intimate contact with the transverse cross section thereof, thus enabling the embedding length to be reduced and consequently the total length of the metal profiles.

In this manner, an assembly is constituted in relation to the transmission of stresses to the ground. Although these stresses are reduced in intensity per unit area as a consequence of the increase in area of the assembly provided by the arrangement of the plastic part in the interaction with the ground, as a sum they result in an increase in the total stress thus transmitted to the ground.

This rearrangement in the distribution of stresses enables the embedding length required for the metal supports at equal loads to be reduced.

Furthermore, the plastic part increases the performance thereof since it is made of plastic and ages better than alternative solutions, such as concrete or cement mortars, and facilitates the on-site execution with respect to the latter.

Likewise, it enables optimising, facilitating and speeding up transportation to remote areas of any city, the plastic part being especially light with respect to known solutions such as concrete or cement mortars which sometimes require a plant to be installed on site.

In a preferred embodiment, the plastic part is equipped with a plurality of ribs between the through hole and the outer cross section, in order to lighten the part since, once it is embedded, said grooves are filled by the ground, and to facilitate the installation and assembly process by directly driving the part.

Alternatively, the cross section defined between the through hole and the outer cross section can be solid.

Preferably, the outer cross section of the plastic part is circular, defining a cylindrical plastic part with an inner through hole adapted to house a portion of the metal profile with friction.

However, the plastic part could have a hexagonal, rectangular, or any other optimised configuration depending on the stresses necessary to be transmitted and the geometry of the metal profile.

Preferably, the plastic part is buried in the ground with one end flush with the ground or substantially flush with the ground.

Additionally, the plastic part can have a diameter of 10-50 cm, preferably 25-35 cm.

Alternatively, if it does not have a cylindrical configuration, the part may be equipped with a total transverse surface of the order of 250-1500 cm².

Likewise, the plastic part consists of a total length of a plurality of centimetres intended to be buried or embedded in the ground in question.

In a preferred embodiment, the through hole is circular in order to house a metal profile with a circular transverse cross section.

Alternatively, the through hole can be rectangular in order to house a metal profile, which is L-shaped, or even adopt other geometric shapes according to the needs and the geometry of the metal profile itself.

### DESCRIPTION OF THE DRAWINGS

To complement the description that is being made and for the purpose of helping to better understand the features of the invention according to a preferred practical exemplary embodiment thereof, a set of drawings is attached as an integral part of said description in which the following is depicted in an illustrative and non-limiting manner:
Figure 1 shows a perspective view of a solution known in the state of the art, wherein a cement mortar is used inside the ground and as reinforcement around the metal profile which is part of a structure supporting at least part of one or more photovoltaic panels.
Figure 2 shows a perspective view of a preferred embodiment of the invention, wherein it shows that the foundation comprises a rectangular or C-shaped metal profile embedded in the ground and a plastic part also buried and clasping said metal profile by means of an inner hole in intimate contact.
Figure 3 shows a perspective view of the plastic part according to the preferred embodiment of figure 1, wherein it shows that the plastic part has a cylindrical configuration, an inner through hole with a rectangular configuration and it is equipped with a plurality of ribs.
Figure 4 shows a perspective view of a second preferred embodiment of the invention, wherein it shows that the foundation comprises a cylindrical metal profile embedded in the ground and a plastic part also embedded and clasping said metal profile by means of an inner hole in intimate contact.
Figure 5 shows a perspective view of the plastic part according to the preferred embodiment of figure 3, wherein it shows that the plastic part has an inner through hole with a circular configuration and it is equipped with a plurality of ribs.

### PREFERRED EMBODIMENT OF THE INVENTION

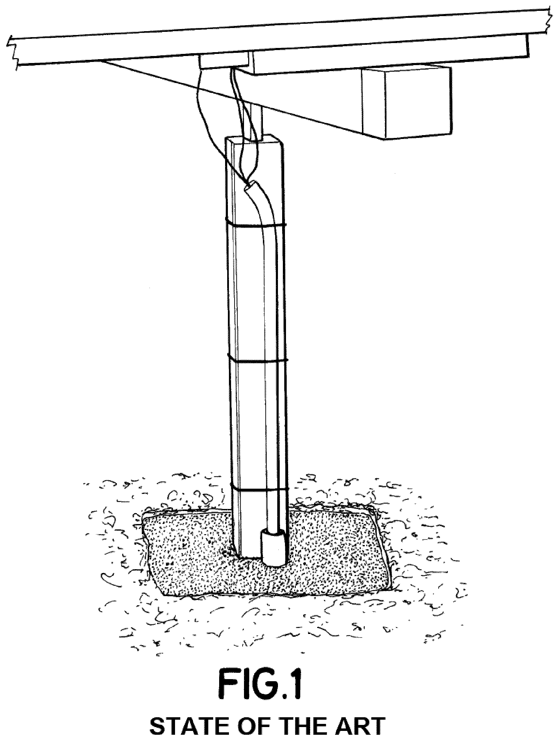

Figure 1 illustrates a solution known in the state of the art, wherein a cement mortar is used inside the ground and as reinforcement around the metal profile which is part of a structure supporting at least part of one or more photovoltaic panels.

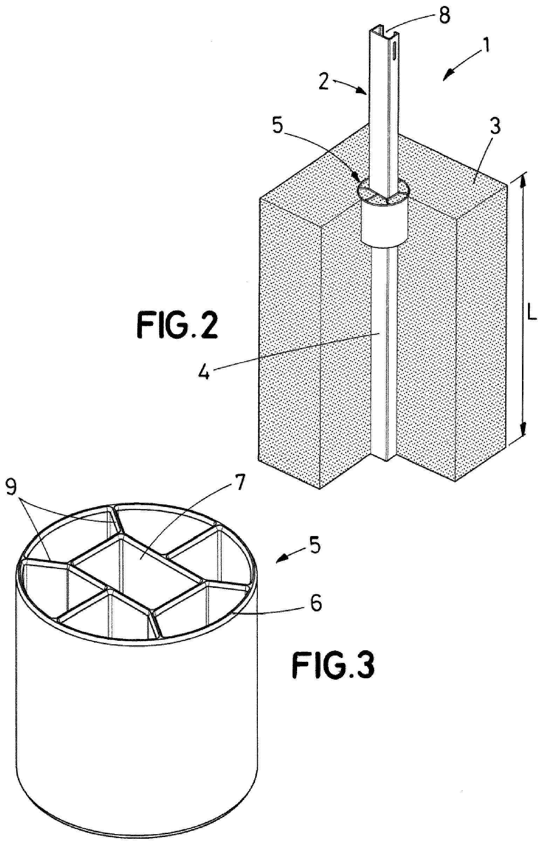

A detailed description of two preferred embodiments of the object of the invention is provided below, with the aid of the attached figures 2-5 described above.

The object of the invention relates to a foundation (1) of photovoltaic structures comprising a metal profile (2) which is part of a structure supporting a panel or a set of photovoltaic panels and comprises a distal portion (4) embedded in the ground (3) at a certain embedding length (L), wherein said foundation (1) further comprises a plastic part (5) embedded in the ground (3), comprising an outer cross section (6) and an inner through hole (7) with a smaller cross section than the outer cross section (6), wherein said through hole (7) which houses in intimate contact the transverse cross section (8) of the metal profile (2) in a section of the distal portion (4) of the metal profile (2) which is embedded in the ground (3), thus enabling by means of the plastic part (5) the embedding length to be reduced and consequently the length of the metal profiles (2).

Figure 2 describes a first exemplary embodiment of the invention wherein it illustrates that the foundation (1) comprises the rectangular metal profile (2) embedded in the ground (3) and the plastic part (5) also buried and clasping said profile metal (2) by means of the inner hole (7) in intimate contact with the transverse cross section (8) of the metal profile (2) in a section of the distal portion (4) of the metal profile (2) which is embedded in the ground (3), thus enabling by means of the plastic part (5) the embedding length to be reduced and consequently the length of the metal profiles (2).

More particularly, in the preferred embodiment of figure 3 it is observed that the part has a circular outer cross section (6) defining a cylindrical plastic part (5).

Likewise, the through hole (7) is rectangular in order to house the metal profile (2) with a substantially rectangular transverse cross section.

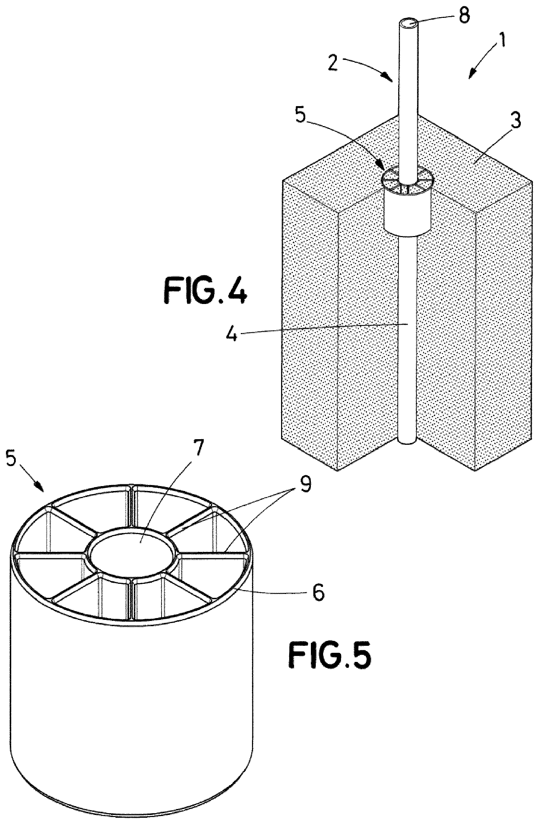

Figure 4 describes a second exemplary embodiment of the invention wherein it illustrates that the foundation (1) comprises the metal profile (2) with a round transverse cross section (8) embedded in the ground (3) and the plastic part (5) also buried and clasping said profile metal (2) by means of the inner hole (7) in intimate contact with the transverse cross section (8) of the metal profile (2) in a section of the distal portion (4) of the metal profile (2) which is embedded in the ground (3), thus enabling by means of the plastic part (5) the embedding length to be reduced and consequently the length of the metal profiles (2).

Figure 5 shows a detail view of the plastic part (5) according to the preferred embodiment of figure 3 wherein it is observed that the through hole (7) has a cylindrical configuration in order to house the cylindrical metal profile (2) in the distal portion (4) embedded in the ground (3).

However, the plastic part (5) could have a hexagonal, octagonal or any other optimised configuration depending on the required load transmission.

## Claims

1. A foundation (1) of photovoltaic structures comprising a metal profile (2) supporting at least part of a photovoltaic panel and comprising a distal portion (4) embedded in the ground (3), wherein said foundation (1) is **characterised in that** it further comprises by way of reinforcement a plastic part (5) embedded in the ground (3), comprising an outer cross section (6) and an inner through hole (7) with a smaller cross section than the outer cross section (6), wherein said through hole (7) houses at least part of the distal portion (4) of the metal profile (2), said through hole (7) being in intimate contact with the transverse cross section (8) thereof, thus enabling the embedding length (L) to be reduced and consequently the length of the metal profiles (2).

2. The foundation (1) of photovoltaic structures of claim 1, wherein the plastic part (5) comprises a plurality of ribs (9) between the through hole (7) and the outer cross section (6).

3. The foundation (1) of photovoltaic structures of claim 1, wherein the cross section defined between the through hole (7) and the outer cross section (6) is solid.

4. The foundation (1) of photovoltaic structures of claim 1, wherein the outer cross section (6) of the plastic part (5) is circular.

5. The foundation (1) of photovoltaic structures of claim 1, wherein the through hole (7) is circular in order to house a metal profile (8) with a circular cross section.

6. The foundation (1) of photovoltaic structures of claim 1, wherein the through hole (7) is rectangular.
